# EUROPÄISCHE PATENTANMELDUNG

(11) **EP 1 227 357 A2**
(43) Veröffentlichungstag der Anmeldung: **31.07.2002**
(21) Anmeldenummer: 01130316.1
(22) Anmeldetag: 19.12.2001
(51) Int. Cl.: G02B 27/09

(54) **Einrichtung zum Erzeugen eines viereckigen, leuchtenden Feldes und Verwendung einer solchen Einrichtung bei einer Optikvorrichtung mit einer zu beleuchtenden Fläche vorbestimmten Form**

(30) Priorität: 24.01.2001 DE 10103098
(71) Anmelder: CARL ZEISS JENA GmbH, 07745 Jena (DE)
(72) Erfinder: Symanowski, Christfried, 07745 Jena (DE); Schröter, Gudrun, 07747 Jena (DE); Schmidt, Dietrich, 07747 Jena (DE)
(74) Vertreter: Grimm, Christian Jan Rainer

(57) **Zusammenfassung**

Bei einer Einrichtung zum Erzeugen eines viereckigen, leuchtenden Feldes mit einem einen viereckigen Querschnitt umfassender Lichtmischstab (2), der eine viereckige Eintrittsfläche (7) und eine viereckige Austrittsfläche (8) aufweist und der über die Eintrittsfläche (7) eingekoppeltes Licht zur Austrittsfläche (8) führt, um in dieser das viereckige, leuchtende Feld zu erzeugen, ist die Austrittsfläche (8) von vier geradlinigen Seiten begrenzt ist, von denen sich jeweils zwei in einem der Eckpunkte der Austrittsfläche (8) treffen, wobei bei einem oder zwei Eckpunkten die sich dort treffenden Seiten unter einem rechten Winkel (α, δ) und bei den restlichen Eckpunkten die sich dort treffenden Seiten unter einem Winkel (β, γ), der ungleich 90° ist, zusammenlaufen.

## Beschreibung

Die Erfindung bezieht sich auf eine Einrichtung zum Erzeugen eines viereckigen, leuchtenden Feldes, mit einem einen viereckigen Querschnitt aufweisenden Lichtmischstab, der eine viereckige Eintrittsfläche und eine viereckige Austrittsfläche aufweist und der über die Eintrittsfläche eingekoppeltes Licht zur Austrittsfläche führt, um in dieser das viereckige, leuchtende Feld zu erzeugen, wobei die Austrittsfläche von vier geradlinigen Seiten begrenzt ist, von denen sich jeweils zwei in einem der Eckpunkte der Austrittsfläche treffen. Die Erfindung bezieht sich ferner auf die Verwendung einer solchen Einrichtung zum Erzeugen eines viereckigen, leuchtenden Feldes bei einer Optikvorrichtung mit einer zu beleuchtenden Fläche vorbestimmter Form und einer Beleuchtungsoptik, die die Austrittsfläche auf die zu beleuchtende Fläche abbildet.

Eine solche Einrichtung zum Erzeugen eines viereckigen, leuchtenden Feldes wird beispielsweise in der Beleuchtungsoptik eines sogenannten digitalen Projektors eingesetzt, der neben der Beleuchtungsoptik noch ein im allgemeinen rechteckiges bilderzeugendes Element, wie z. B. eine Kippspiegel- oder LCD-Matrix, und eine Projektionsoptik zum Projizieren des durch das bilderzeugende Element erzeugten Bildes umfaßt. Bei einem solchen digitalen Projektor ist es für eine hohe Bildqualität erforderlich, daß das bilderzeugende Element mittels der Beleuchtungsoptik möglichst gleichmäßig ausgeleuchtet wird. Deswegen enthält die Beleuchtungsoptik den Lichtmischstab, dessen Austrittsfläche herkömmlicherweise eine rechteckige Form aufweist, wenn das bilderzeugende Element rechteckig ist. Es hat sich jedoch gezeigt, daß zur Abbildung des leuchtenden Feldes in der Austrittsfläche des Lichtmischstabes auf das bilderzeugende Element eine aufwendige Optik notwendig ist, um eine möglichst verzeichnungsfreie Abbildung zu gewährleisten. Dabei tritt auch häufig noch die zusätzliche Schwierigkeit auf, daß die Austrittsfläche und die Fläche des bilderzeugenden Elementes nicht in zueinander parallelen Ebenen liegen, sondern gegeneinander geneigt sind, so daß auch dadurch Verzeichnungen auftreten, die zu einer verschlechterten Gleichmäßigkeit der Ausleuchtung des bilderzeugenden Elementes führen.

Ausgehend hiervon ist es Aufgabe der Erfindung, die Einrichtung zum Erzeugen eines viereckigen, leuchtenden Feldes der eingangs genannten Art so zu verbessern, daß mit ihr eine zu beleuchtende Fläche vorbestimmter Form möglichst gleichmäßig beleuchtet werden kann.

Erfindungsgemäß wird diese Aufgabe bei einer Einrichtung zum Erzeugen eines viereckigen, leuchtenden Feldes der eingangs genannten Art dadurch gelöst, daß die sich in einem oder zwei Eckpunkten treffenden Seiten unter einem rechten Winkel und die sich in den restlichen Eckpunkten treffenden Seiten unter einem Winkel, der ungleich 90° ist, zusammenlaufen. Dadurch kann die Form der Austrittsfläche des Lichtmischstabes so gewählt werden, daß die durch die Abbildung der Austrittsfläche auf die zu beleuchtende Fläche bedingte Verzeichnung kompensiert und die zu beleuchtende Fläche gleichmäßig ausgeleuchtet wird. Der Lichtmischstab kann sich bevorzugt geradlinig erstrecken oder abgewinkelt sein.

Da die Austrittsfläche und bevorzugt auch die restlichen Querschnittsflächen des Lichtmischstabes einen oder zwei rechte Winkel aufweisen, ist die Herstellung des Lichtmischstabes vereinfacht. Insbesondere wenn die vier Seiten jeder Querschnittsfläche des Lichtmischstabes unter denselben Winkeln wie die Seiten der Austrittsfläche zusammenlaufen, kann der Lichtmischstab einfach mit der erforderlichen Genauigkeit hergestellt werden. Wenn er ein Vollmischstab ist, kann er durch Schleifen und Polieren eines Rohlings gebildet werden. Ist er ein Hohlmischstab, kann er aus vier verspiegelten Platten hergestellt werden.

Weiter kann die erfindungsgemäße Einrichtung dadurch weitergebildet werden, daß die Querschnittsfläche des Lichtmischstabes von der Eintrittsfläche bis zur Austrittsfläche hin abnimmt. Da bei einem Lichtmischstab das Produkt von Eintrittsfläche mit Apertur der Eintrittsfläche gleich dem Produkt von Austrittsfläche mit Apertur der Austrittsfläche ist, wird eine größere Apertur der Austrittsfläche möglich. Gleichzeitig kann die Eintrittsfläche groß ausgebildet werden, was zu einem leichten Einkoppeln des Lichts in den Lichtmischstab führt.

Eine besonders vorteilhafte Weiterbildung der erfindungsgemäßen Einrichtung besteht darin, daß der Lichtmischstab aus einem für das Licht transparenten Material gebildet ist und somit einen Vollmischstab ist, bei dem das Licht, das nicht direkt von der Eintrittsfläche zur Austrittsfläche gelangt, durch Totalreflexion geführt wird. Da bei der Totalreflexion keinerlei Verluste auftreten und somit nur die durch die Materialabsorption bedingten Verluste vorhanden sind, wird fast das gesamte eingekoppelte Licht zur Austrittsfläche geführt, so daß ein sehr hoher Wirkungsgrad der Lichtübertragung verwirklicht wird. Des weiteren ist es noch vorteilhaft, daß ein übermäßiges Erwärmen des Lichtmischstabes verhindert wird, da bei der Totalreflexion keine Verluste auftreten, die zu einer Erwärmung beitragen könnten.

Eine besondere Weiterbildung der erfindungsgemäßen Einrichtung besteht darin, daß der Lichtmischstab einen Hohlquerschnitt aufweist, der durch vier sich von der Eintrittsfläche zur Austrittsfläche erstreckende reflektierende Flächen gebildet ist. Aufgrund dieses Aufbaus des Lichtmischstabes ist eine einfache und genaue Herstellung möglich. Ferner ist bei dieser Ausbildung besonders vorteilhaft, daß die Austrittsfläche nicht durch eine Endfläche des Materials, aus dem der Lichtmischstab hergestellt ist, gebildet ist, sondern der Bereich am Ende des Lichtmischstabes zwischen den vier reflektierenden Flächen ist, also in der Regel ein Luftabschnitt, da sich der Lichtmischstab herkömmlicherweise in Umgebungsatmosphäre und somit in Luft befindet. Dies führt zu dem Vorteil, daß sich keine Verschmutzungen oder Beschläge auf der Austrittsfläche bilden können, die die Gleichmäßigkeit des erzeugten viereckigen, leuchtenden Feldes nachteilig beeinflussen könnten.

Die erfindungsgemäße Einrichtung kann insbesondere dadurch weitergebildet werden, daß der Lichtmischstab einen Vollmischstab-Abschnitt aus einem für das Licht transparenten Material und einen damit optisch gekoppelten, mit reflektierenden Flächen gebildeten Endabschnitt umfaßt, der einen Hohlquerschnitt aufweist und dessen dem Vollmischstab-Abschnitt abgewandtes Ende die Austritts- oder Eintrittsfläche bildet. Da die Austritts- oder Eintrittsfläche durch das dem Vollmischstab-Abschnitt abgewandte Ende des Endabschnitts gebildet ist, wird verhindert, daß sich Verschmutzungen oder Beschläge auf dieser Fläche ansammeln können, wodurch das in der Austrittsfläche gebildete leuchtende Feld nicht nachteilig beeinflußt wird.

In einer bevorzugten Weiterbildung der erfindungsgemäßen Einrichtung erstrecken sich die reflektierenden Flächen teilweise über den Vollmischstab-Abschnitt. Dadurch ist der Lichtmischstab besonders einfach herzustellen. So können die reflektierenden Flächen beispielsweise mittels eines optischen Feinkitts, der lichtdurchlässig ist, mit dem Vollmischstab-Abschnitt verbunden werden. Bei dieser Art der Verbindung wird vorteilhaft keine weitere Halterung oder Fassung für den Endabschnitt benötigt.

Ferner kann die erfindungsgemäße Einrichtung dadurch weitergebildet werden, daß die Querschnittsfläche des Endabschnitts größer ist als die des Vollmischstab-Abschnitts. Dadurch wird eine Einrichtung zum Erzeugen eines viereckigen, leuchtenden Feldes mit einem Lichtmischstab bereitgestellt, bei der die Änderung der Querschnittsfläche in einfacher Art und Weise möglich ist. Wenn bei dieser Weiterbildung die reflektierenden Flächen auch noch den Vollmischstab-Abschnitt teilweise übergreifen, kann der Endabschnitt so angeordnet werden, daß er nicht in Kontakt mit dem Vollmischstab-Abschnitt steht und das zwischen ihnen ein Spalt vorhanden ist. Dadurch wird vorteilhaft erreicht, daß der übergreifende Teil des Endabschnitts nicht die Totalreflexion des Vollmischstab-Abschnitts in diesem Bereich aufhebt.

Eine besonders vorteilhafte Ausgestaltung der erfindungsgemäßen Einrichtung besteht darin, daß der Lichtmischstab einen mit reflektierenden Flächen gebildeten Anfangsabschnitt umfaßt, der einen Hohlquerschnitt aufweist und dessen dem Vollmischstab-Abschnitt abgewandtes Ende die Eintrittsfläche bildet. Mit diesem Lichtstab ist es möglich, die Bildung von Verschmutzungen und Beschlägen sowohl auf der Eintritts- als auch auf der Austrittsfläche und somit auch eine Verschlechterung der optischen Eigenschaften des Lichtmischstabes wirksam zu verhindern.

Die erfindungsgemäße Einrichtung kann auch noch dadurch weitergebildet werden, daß der Lichtmischstab aufgrund einer sich in Richtung von der Eintrittsfläche zur Austrittsfläche hin erstreckenden Unterteilung einen ersten und zweiten Lichtführungsbereich zum getrennten Führen von Anteilen des eingekoppelten Lichts aufweist. Dadurch wird es möglich, eine gezielte Ungleichmäßigkeit der Leuchtdichte in dem leuchtenden Feld zu erzeugen. Diese kann so ausgelegt werden, daß die zu beleuchtende Fläche gleichmäßig ausgeleuchtet wird.

Des weiteren kann die erfindungsgemäße Einrichtung zum Erzeugen eines viereckigen, leuchtenden Feldes, insbesondere bei einer Optikvorrichtung mit einer zu beleuchtenden Fläche vorbestimmter Form und mit einer Beleuchtungsoptik, die die Austrittsfläche auf die zu beleuchtende Fläche abbildet, verwendet werden. Bevorzugt ist noch eine Projektionsoptik zum Projizieren der zu beleuchtenden Fläche auf eine Projektionsfläche vorgesehen. Somit wird eine Optikvorrichtung bereitgestellt, bei der aufgrund der erfindungsgemäßen Einrichtung eine gleichmäßigere Ausleuchtung der zu beleuchtenden Fläche ermöglicht wird, da die durch die Beleuchtungsoptik bedingten Verzeichnungen durch eine geeignete Wahl der Form der viereckigen Austrittsfläche des Lichtmischstabes kompensiert werden können.

Die Erfindung wird nachfolgend anhand der Zeichnungen im Prinzip beispielshalber noch näher erläutert. Es zeigen:
- Fig. 1: eine perspektivische Darstellung eines erfindungsgemäßen Lichtmischstabes;
- Fig. 2: eine Vorderansicht des erfindungsgemäßen Lichtmischstabes von Fig. 1;
- Fig. 3: eine prinzipielle Darstellung einer erfindungsgemäßen Optikvorrichtung mit dem in Fig. 1 und 2 gezeigten erfindungsgemäßen Lichtmischstab;
- Fig. 4: eine Vorderansicht eines erfindungsgemäßen Lichtmischstabes gemäß einer anderen Ausführungsform;
- Fig. 5: eine Vorderansicht einer Weiterbildung des Lichtmischstabes von Fig. 4;
- Fig. 6: eine Seitenansicht eines erfindungsgemäßen Lichtmischstabes gemäß einer weiteren Ausführungsform;
- Fig. 7: eine Vorderansicht eines in Fig. 6 gezeigten Lichtmischstabes;
- Fig. 8: eine Seitenansicht eines erfindungsgemäßen Lichtmischstabes gemäß einer weiteren Ausführungsform;
- Fig. 9: eine Vorderansicht eines erfindungsgemäßen Lichtmischstabes gemäß einer weiteren Ausführungsform;
- Fig. 10: eine Seitenansicht eines erfindungsgemäßen Lichtmischstabes gemäß einer weiteren Ausführungsform;
- Fig. 11: eine Vorderansicht eines erfindungsgemäßen Lichtmischstabes gemäß einer weiteren Ausführungsform, und
- Fig. 12: eine Vorderansicht eines erfindungsgemäßen Lichtmischstabes gemäß einer weiteren Ausführungsform.

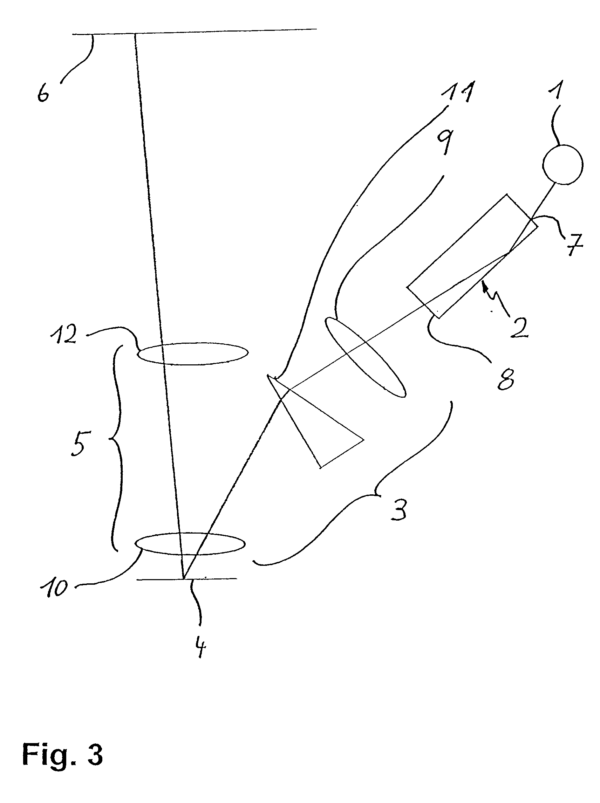

In Fig. 3 ist eine erfindungsgemäße Projektionsvorrichtung schematisch in Draufsicht gezeigt, wobei beispielhaft ein Strahlenverlauf eingezeichnet ist. Die Projektionsvorrichtung enthält eine Lichtquelle 1, einen Lichtmischstab 2, in den Licht der Lichtquelle 1 eingekoppelt werden kann, und eine dem Lichtmischstab 2 nachgeschaltete Beleuchtungsoptik 3, die mit dem aus dem Lichtmischstab 2 austretenden Licht eine zu beleuchtende Fläche 4 ausleuchten kann. Die zu beleuchtende Fläche 4 ist bevorzugt ein bilderzeugendes Element und kann beispielsweise eine Kippspiegelmatrix oder eine LCD-Matrix mit viereckiger, insbesondere rechteckiger oder quadratischer Form sein. Die Projektionsvorrichtung umfaßt ferner noch eine Projektionsoptik 5, mit der die zu beleuchtende Fläche 4 auf eine Projektionsfläche 6 projiziert werden kann.

Der Lichtmischstab 2 weist eine der Lichtquelle 1 zugewandte Eintrittsfläche 7 und eine der Beleuchtungsoptik 3 zugewandte Austrittsfläche 8 auf. Er ist dabei so angeordnet, daß die Austrittsfläche 8 sowohl in der in Fig. 3 gezeigten Draufsicht gesehen als auch in einer Seitenansicht der Projektionsvorrichtung gesehen nicht parallel zur zu beleuchtenden Fläche 4 ist, sondern jeweils einen Winkel mit dieser einschließt.

Die Beleuchtungsoptik 3 ist so ausgelegt, daß die Austrittsfläche 8 auf die zu beleuchtende Fläche 4 abgebildet wird, und weist dazu Linseneinheiten 9, 10 und ein Umlenkprisma 11 auf. In dem Umlenkprisma 11 wird das aus dem Lichtmischstab 2 austretende Licht nur durch Brechung und nicht durch Reflexion umgelenkt.

Die Projektionsoptik 5 umfaßt die Linseneinheit 10 sowie eine weitere Linseneinheit 12. Durch die Verwendung des Umlenkprismas 11 und dadurch, daß die Linseneinheit 10 sowohl für die Beleuchtungsoptik 3 als auch für die Projektionsoptik 5 eingesetzt wird, kann eine sehr kompakte Projektionsvorrichtung gebildet werden.

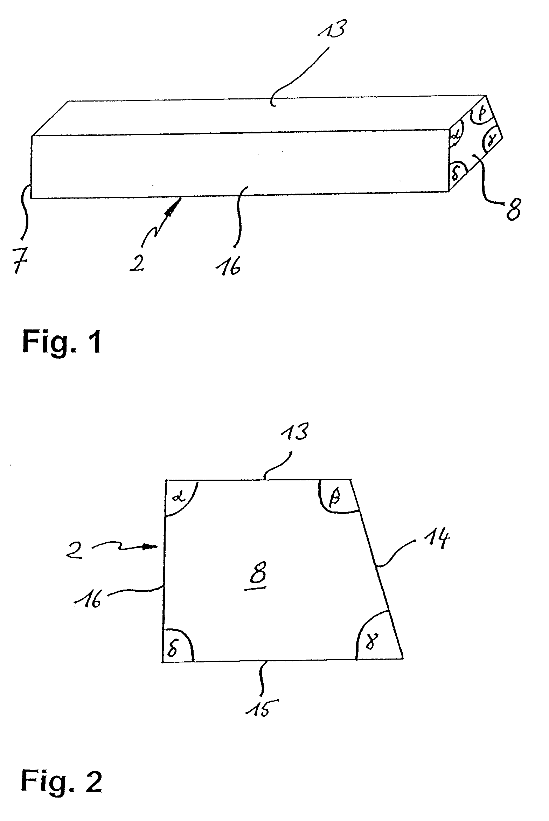

Der Lichtmischstab 2 besteht, wie am besten aus den Fig. 1 und 2 ersichtlich, aus einem für das Licht der Lichtquelle 1 transparenten Material, weist einen Vollquerschnitt auf und führt die Lichtstrahlen, die nicht direkt von der Eintrittsfläche 7 zur Austrittsfläche 8 gelangen, durch Totalreflexion an den Grenzflächen zwischen den Seitenflächen 13, 14, 15 und 16 des Lichtmischstabes 2 und der Umgebung von der Eintrittsfläche 7 zur Austrittsfläche 8. Ein solcher Lichtmischstab 2 wird als "Vollmischstab" bezeichnet.

Die Form des Lichtmischstabes 2 ist so gewählt, daß er einen viereckigen Querschnitt aufweist, wobei bei der viereckigen Austrittsfläche 8 zwei in Umfangsrichtung der Austrittsfläche 8 benachbarte Innenwinkel α, δ einen Wert von 90° aufweisen, während ein weiterer Innenwinkel γ größer als 90° ist und der letzte Innenwinkel β kleiner als 90° ist. Die Innenwinkel α, β, γ, δ sind dabei so gewählt, daß die durch die relative Lage der Austrittsfläche 8 des Lichtmischstabes 2 zur zu beleuchtenden Fläche 4 und durch die Beleuchtungsoptik 3 bedingte Verzeichnung bei der Abbildung der Austrittsfläche 8 so kompensiert wird, daß die zu beleuchtende Fläche 4, die hier eine rechteckige Fläche ist, gleichmäßig ausgeleuchtet wird. Bevorzugt werden die Beleuchtungsoptik 3 und der Lichtmischstab 2 so ausgelegt, daß die zu beleuchtende Fläche 4 etwas überleuchtet wird, d. h., die abgebildete Austrittsfläche 8 ist etwas größer als die zu beleuchtende Fläche 4 und steht an allen vier Seiten der zu beleuchtenden Fläche 4 über. Dadurch wird beispielsweise die Ausleuchtung der zu beleuchtenden Fläche 4 sichergestellt, wenn die Abbildung der Austrittsfläche doch noch geringfügig von der Rechteckform abweicht oder wenn die Ausrichtung der zu beleuchtenden Fläche 4 nicht optimal ist.

Der Vollmischstab 2 kann beispielsweise aus einem quaderförmigen Rohling durch Schleifen und Polieren hergestellt werden.

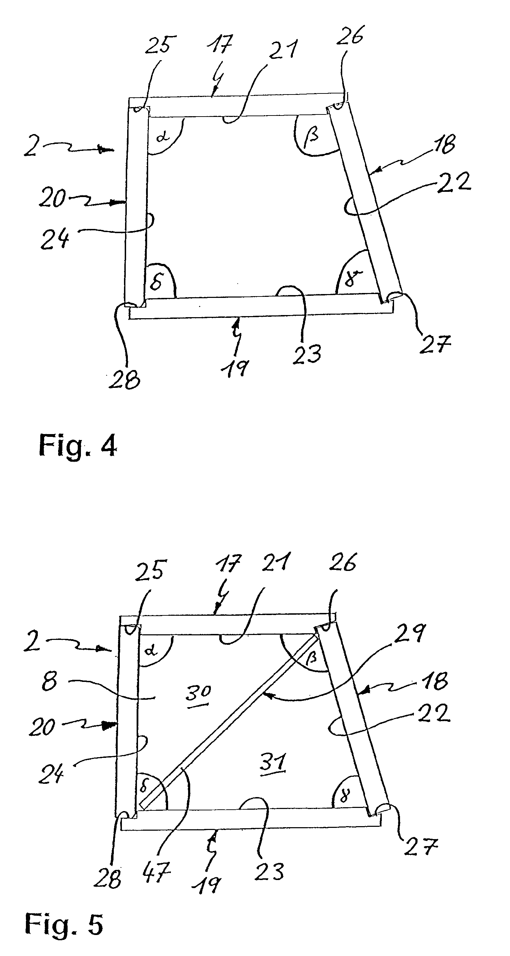

Alternativ kann der Lichtmischstab 2 als Hohlmischstab ausgebildet sein, wie dies in Fig. 4 gezeigt ist. Bei Ausführungsform ist der Mischstab durch vier Seitenplatten 17, 18, 19 und 20 gebildet, deren Innenflächen 21, 22, 23 und 24 verspiegelt sind.

Die vier Seitenplatten 17 bis 20 bilden jeweils einen im wesentlichen rechteckigen Querschnitt aus, wobei die Seitenplatten 17 und 19 an ihren Innenflächen 21, 23 an beiden Enden Ausfräsungen 25, 26, 27 und 28 aufweisen, die sich in der Richtung von der Eintrittsfläche 7 zur Austrittsfläche 8 erstrecken. Diese Ausfräsungen 25, 26, 27, 28, in denen die Seitenplatten 18 und 20 eingesetzt sind, sind so ausgebildet, daß im zusammengebauten Zustand, der in Fig. 4 gezeigt ist, die gewünschten Innenwinkel α, β, γ, δ vorliegen. Bevorzugt werden die Seitenplatten 17 bis 20 dadurch zusammengehalten, daß in dem in Fig. 4 gezeigten Zustand ein Schrumpfschlauch (nicht gezeigt) über die Seitenplatten 17 bis 20 übergestülpt wird, der danach erwärmt wird und sich zusammenzieht, so daß die Seitenplatten 17 bis 20 unter elastischer Vorspannung aneinander gedrückt werden. Dieser Schrumpfschlauch kann beispielsweise in einem Mittelabschnitt des Lichtmischstabes 2 angeordnet werden. Es können auch zwei Schrumpfschläuche vorgesehen werden, einer an einem an der Eintrittsfläche 7 und einer an einem an der Austrittsfläche 8 angrenzenden Bereich.

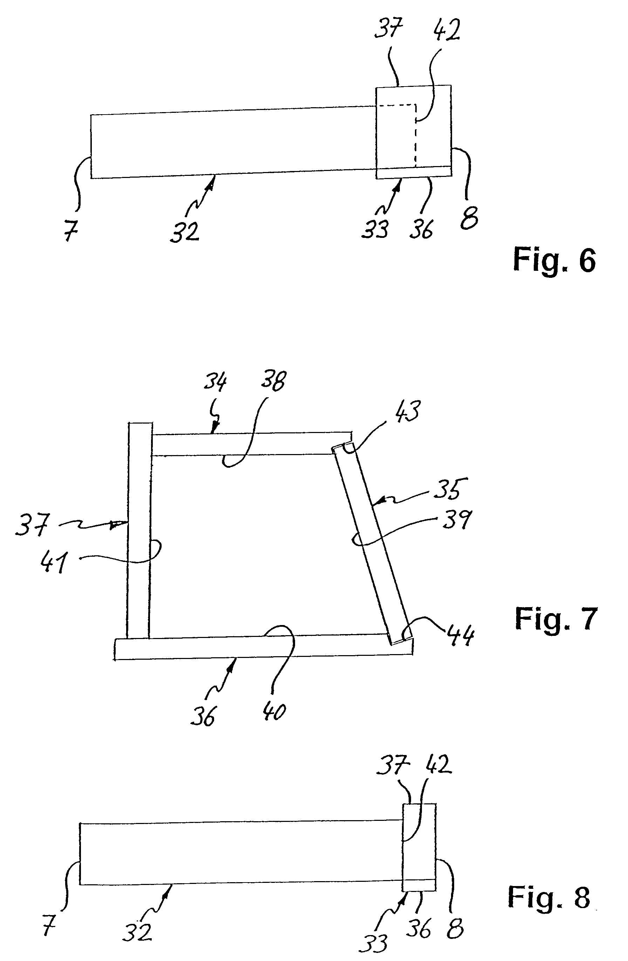

Fig. 5 zeigt eine Weiterbildung des in Fig. 4 gezeigten Hohlmischstabes. Bei dieser Weiterbildung ist eine Unterteilung in Form einer beidseitig verspiegelten Platte 29 vorgesehen, die sich in Richtung von der Eintrittsfläche 7 zur Austrittsfläche 8 hin erstreckt und, wie der Fig. 5 zu entnehmen ist, im Querschnitt diagonal im Lichtmischstab 2 angeordnet ist. Diese beidseitig verspiegelte Platte 29 erstreckt sich bevorzugt von der Eintrittsfläche 7 um eine vorbestimmte Länge in den Lichtmischstab 2, wobei die vorbestimmte Länge die Hälfte bis ein Drittel der Länge des Lichtmischstabes 2 betragen kann. Durch diese Unterteilung werden ein erster und ein zweiter Lichtführungsbereich 30 und 31 gebildet, die im Querschnitt gesehen jeweils eine Dreiecksform aufweisen. Aufgrund dieser Querschnittsform ist die Leuchtdichteverteilung am Ende der Lichtführungsbereiche 30 und 31 anders als an der gleichen Stelle in dem in Fig. 4 gezeigten Lichtmischstab, so daß auch die Leuchtdichteverteilung in der Austrittsfläche 8 verschieden von der des in Fig. 4 gezeigten Lichtmischstabes 2 ist. Somit führt die Unterteilung zu einer gezielten Inhomogenisierung der Leuchtdichteverteilung in der Austrittsfläche 8, wobei dieser Effekt um so größer ist, je länger die Platte 29 ist. Dies kann dazu eingesetzt werden, daß z. B. bei der in Fig. 3 gezeigten Projektionsvorrichtung die zu beleuchtende Fläche 4 noch gleichmäßiger ausgeleuchtet wird. Die Platte 29 ist bevorzugt so im Hohlmischstab angeordnet, daß ihre der Austrittsfläche 8 zugewandte Stimseite 47 nicht in der Austrittsfläche 8 liegt, sondern innerhalb des Hohlmischstabes. Die Stirnseite 47 und die entsprechende entgegengesetzte Stimseite am anderen Plattenende können, wenn die Platte 29 aus einem für das Licht transparenten Material gebildet ist, poliert und eben sein, so daß die Platte 29 als Lichtleiter für das auf die entgegengesetzte Stirnseite treffende Licht dient. Dann treten nur die geringen Reflektions- und Absorptionsverluste auf, wodurch vorteilhaft durch die Platte 29 nur sehr geringe Verluste verursacht werden. Altemativ kann die entgegengesetzte Stimseite auch geschwärzt sein, so daß das darauf treffende Licht nicht weitergeleitet, sondern abgeschattet wird.

In einer weiteren bevorzugten Ausgestaltung der Erfindung kann eine solche Unterteilung entsprechend der Ausführungsform von Fig. 5 auch bei einem Vollmischstab gebildet werden. Dazu wird der Anfangsabschnitt des Lichtmischstabs 2, der die Unterteilung aufweisen soll, durch zwei mittels eines Spaltes getrennter Prismen gebildet. An den Grenzflächen der Prismenflächen und des Spaltes findet für Lichtstrahlen mit vorbestimmten Winkeln eine Totalreflexion statt, so daß durch den Spalt zwischen den Prismen auch eine Unterteilung gebildet ist, die zur Inhomogenisierung der Leuchtdichteverteilung in der Austrittsfläche 8 führt.

In Fig. 6 und 7 ist eine weitere Ausführungsform des erfindungsgemäßen Lichtmischstabes 2 gezeigt. Bei dieser Ausführungsform umfaßt der Lichtmischstab 2 einen Vollmischstab-Abschnitt 32, der aus einem für das Licht transparenten Material, wie z. B. Glas, gebildet ist und einen Vollquerschnitt aufweist, und einen Endabschnitt 33, der an dem ausgangsseitigen Ende des Vollmischstab-Abschnitts 32 mit diesem optisch gekoppelt ist.

Der Endabschnitt 33 weist, wie am besten aus Fig. 7 ersichtlich ist, einen Hohlquerschnitt auf, der durch vier Platten 34, 35, 36, 37 begrenzt ist. Die Innenseiten 38, 39, 40, 41 der Platten 34 bis 37 sind verspiegelt, und das der Eintrittsfläche 7 abgewandte Ende des Endabschnitts 33 bildet die Austrittsfläche 8. Die gegenüberliegenden Platten 34 und 36 weisen an der Seite, an der die Innenwinkel ungleich 90° sind, in Längsrichtung des Lichtmischstabes 2 verlaufende Ausfräsungen 43, 44 auf, in denen die Platte 35 geführt ist. Die Ausfräsungen 43 und 44 sind so gebildet, daß die gewünschten Innenwinkel β, γ in der Austrittsfläche 8 des Lichtmischstabes 2 vorhanden sind. Der rechte Winkel zwischen den Platten 34 und 37 kann dadurch verwirklicht werden, daß die auf der Innenseite 41 der Platte 37 aufliegende Seitenfläche der Platte 34 senkrecht zur Innenseite 38 der Platte 34 verläuft. In gleicher Weise kann der rechte Winkel zwischen den Platten 37 und 36 verwirklicht werden, wie aus Fig. 7 ersichtlich ist.

Die Platten 34 bis 37 sind so angeordnet, daß sich die Innenseiten 38 bis 41 senkrecht zu einer der Eintrittsflächen 7 entgegengesetzten Endfläche 42 des Vollmischstabes-Abschnittes 32 erstrecken, wodurch sich auch der Lichtmischstab 2 geradlinig erstreckt. Die Platten 34 bis 37 können natürlich auch so angeordnet sein, daß sich die Innenseiten 38 bis 41 nicht in einem rechten Winkel sondern unter einem anderen Winkel zur Endfläche 42 erstrecken. In diesem Fall ist der Lichtmischstab 2 geknickt.

Wie am besten aus Fig. 6 ersichtlich ist, erstrecken sich die Platten 34 bis 37 in Längsrichtung des Lichtmischstabes 2 teilweise über den Vollmischstab-Abschnitt 32, so daß der Endabschnitt 33 den Vollmischstab-Abschnitt 32 teilweise übergreift. Die Platten 34 bis 37 sind mittels eines optischen Feinkitts am Vollmischstab-Abschnitt 32 fixiert. Alternativ kann auch statt des optischen Feinkitts ein Schrumpfschlauch (nicht gezeigt) über die Platten 34 bis 37 bevorzugt im Bereich des Vollmischstab-Abschnitts 32 übergestülpt und dann entwärmt werden, wodurch er sich dadurch so zusammenzieht, daß die Platten 34 bis 37 unter elastischer Vorspannung gegen den Vollmischstab-Abschnitt 32 gedrückt und somit fixiert werden. Bei diesem Lichtmischstab 2 heben die Platten 34 bis 37 in dem Bereich, in dem sie Kontakt mit dem Vollmischstab-Abschnitt 32 stehen, die Totalreflexion auf und ersetzen sie durch Reflexionen an den verspiegelten Innenseiten 38 bis 41.

Der Lichtmischstab 2 ist bevorzugt so ausgelegt, daß bei dem in Fig. 6 gezeigten Zustand die Länge des in Längsrichtung des Lichtmischstabes 2 über den Vollmischstab-Abschnitt 32 überstehenden Teils des Endabschnitts 33 (also der überstehende Hohlabschnitt) größer ist als die Schärfentiefe der Beleuchtungsoptik 3. Bevorzugt ist die Länge des überstehenden Teils zumindest eine Größenordnung größer als die Schärfentiefe. Dadurch wird sichergestellt, daß eine Verschmutzung oder ein Beschlag auf der Endfläche 42 des Vollmischstab-Abschnitts 32 zu keiner wesentlichen Verschlechterung der Ausleuchtung der zu beleuchtenden Fläche führt.

Der in Fig. 6 und 7 gezeigte Lichtmischstab 2 erstreckt sich geradlinig. Er kann jedoch beispielsweise im Verlauf des Vollmischstab-Abschnitts 32 geknickt sein. Wesentlich ist dabei, daß die Lichtmischung des eingekoppelten Lichts im wesentlichen im Vollmischstab-Abschnitt 32 stattfindet, so daß der Vorteil der sehr geringen Übertragungsverluste eines Vollmischstabes genutzt wird, und daß die Austrittsfläche 8 durch den Endabschnitt 33 mit dem Hohlquerschnitt festgelegt ist, so daß die Austrittsfläche 8 immer frei von Beschlägen und Verschmutzungen ist. Der Beitrag des Endabschnitts 31 zur Lichtmischung hängt von seiner Länge ab und ist umso größer, je länger er ist.

Bei dieser Ausführungsform kann der Lichtmischstab durch eine Halterung gelagert werden, die nur am Endabschnitt 33 angreift. Diese Halterung ist bevorzugt mit den Außenseiten der vier Platten 34 bis 37 verbunden und führt zu keiner nachteiligen Beeinflussung der Lichtmischung, da die Innenseiten 38 bis 41 der Platten 34 bis 37 davon nicht betroffen sind. Falls die Größe des übergreifenden Teils des Endabschnitts 33 nicht ausreicht, um den Lichtstab nur durch eine an den Endabschnitt 33 angreifende Halterung zu haltern, kann noch eine weitere Halterung vorgesehen sein, die an dem Vollmischstab-Abschnitt 32 angreift. Da eine solche Halterung aber im Kontaktbereich mit dem Vollmischstab-Abschnitt 32 die Totalreflexion aufhebt, führt dies immer zu unerwünschten Verlusten. Diese können dadurch verringert werden, daß der mit dem Vollmisch-Abschnitt 32 in Kontakt stehende Teil der Halterung verspiegelt ist. Auch in diesem Fall besteht jedoch der Vorteil, daß die durch die Halterung bedingten Verluste geringer sind als bei einem reinen Vollmischstab, da dieser normalerweise durch eine an mindestens zwei in Längsrichtung voneinander beabstandeten Stellen des Vollmischstabes angreift und somit an diesen beiden Stellen Verluste verursacht werden. Somit können bei dem in Fig. 6 gezeigten Lichtmischstab die durch die Halterung bedingten Verluste vorteilhaft verringert werden.

Bei einer weiteren Ausführungsform des erfindungsgemäßen Lichtmischstabes 2 findet kein Übergreifen des Vollmischstab-Abschnittes 32 durch den Endabschnitt 33 statt, wie dies in Fig. 8 gezeigt ist. Bei dieser Ausführungsform liegt die Endfläche 42 des Vollmischstab-Abschnitts 32 in der gleichen Ebene wie die Eintrittsfläche des Endabschnitts 33, so daß es an der Übergangsstelle zwischen dem Vollmischstab-Abschnitt 32 und dem Endabschnitt 33 zu keinen Lichtverlusten kommt. Femer wird in keinem Bereich des Vollmischstab-Abschnittes 32 die Totalreflexion aufgehoben.

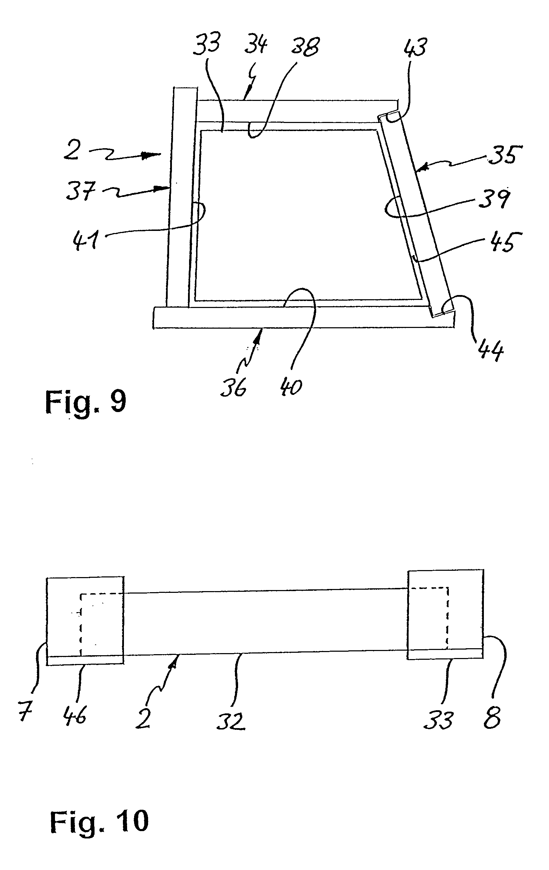

In Fig. 9 ist eine weitere Ausführungsform des erfindungsgemäßen Lichtmischstabes 2 gezeigt. Bei dieser Ausführungsform ist die Querschnittsfläche des Endabschnitts 33 größer als die Querschnittsfläche des Vollmischstab-Abschnittes 32. Der Vollmischstab-Abschnitt 32 und der Endabschnitt 33 sind so angeordnet, daß die Mittelpunkte ihrer Querschnittsflächen auf der Längsmittelachse des Lichtmischstabes 2 liegen. Der Endabschnitt 33 wird in gleicher Weise wie bei der in Fig. 7 gezeigten Ausführungsform durch vier Platten 34 bis 37 gebildet. Wenn der Endabschnitt 33 den Vollmischstab-Abschnitt 32 überlappt, führt dies dazu, daß in dem Überlappungsbereich zwischen dem Vollmischstab-Abschnitt 32 und dem Endabschnitt 33 ein umlaufender Spalt 45 vorhanden ist. Dadurch wird das Licht in den Lichtmischstab 2 bis zur Endfläche 42 des Vollmischstab-Abschnitts 32 mittels Totalreflexion geführt und erst im überstehenden Hohlabschnitt des Endabschnitts 33 wird es mittels Reflexion an den Platten 34 bis 37 geführt. Damit sind die durch die Reflexion an den Platten 34 bis 37 bedingten Verluste im Vergleich zu dem in Fig. 6 und 7 gezeigten Lichtmischstab 2 verringert.

Alternativ kann der erfindungsgemäße Lichtmischstab 2 auch so verwendet werden, daß der Endabschnitt 33 zur Lichtquelle 1 hin gewandt ist und daß dessen Ende die Eintrittsfläche 7 bildet (somit sind gegenüber der in Fig. 3 gezeigten Ausführungsform die Eintritts- und Austrittsfläche miteinander vertauscht). Dies verringert die thermische Materialbelastung des Lichtmischstabs 2, da bei der in Fig. 3 gezeigten Optikvorrichtung der sekundäre Fokus der Lichtquelle 1 in der Ebene der Eintrittsfläche 7 liegt, die aufgrund des Hohlquerschnitts des Endabschnitts 33 keine Materialendfläche des Lichtmischstabes 2 ist.

Bei einer weiteren Ausführungsform des erfindungsgemäßen Lichtmischstabes 2 weist der Vollmischstab-Abschnitt 32 an seinen in Längsrichtung gegenüberliegenden Enden einen Endabschnitt 33 und einen Anfangsabschnitt 46 auf, wie dies in Fig. 10 gezeigt ist. Der Anfangs- und Endabschnitt 46, 33 können, wie in Fig. 10 beispielhaft gezeigt ist, beide wie bei der in Fig. 6 und 7 gezeigten Ausführungsform ausgebildet sein. Sie können jedoch auch wie bei den anderen beschriebenen Ausführungsformen ausgebildet sein und insbesondere können sie voneinander verschieden ausgebildet sein. Bei einem solchen Lichtmischstab 2 ist sowohl die Eintrittsfläche 7 als auch die Austrittsfläche 8 in Luft gebildet, wodurch die oben beschriebenen Vorteile solcher Eintritts- und Austrittsflächen kombiniert sind.

Wenn bei dieser Ausführungsform sowohl der Endabschnitt 33 als auch der Anfangsabschnitt 46 am Vollmischstab-Abschnitt 32 anliegen, kann der Lichtmischstab 2 durch eine Halterung gehaltert sein, die einerseits am Endabschnitt 33 und andererseits am Anfangsabschnitt 46 angreift, so daß durch die Halterung keinerlei Verluste verursacht werden, da die Halterung mit den Plattenaußenseiten des Endabschnitts 33 und des Anfangsabschnitts 46 verbunden sein kann und diese Außenseiten nicht zur Lichtmischung beitragen.

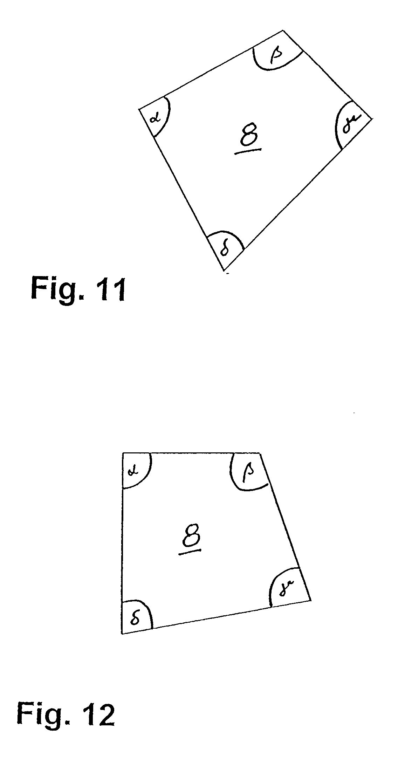

Die Querschnittsform des viereckigen Lichtmischstabes 2 ist nicht auf den in Fig. 2 gezeigte Form beschränkt. So können beispielsweise auch, wie in Fig. 11 ersichtlich ist, die zwei gegenüberliegenden Innenwinkel α und γ rechte Winkel sein. Bei dem gezeigten Beispiel ist dann der Winkel β größer als 90° und der Winkel δ ist kleiner als 90°.

Alternativ kann der erfindungsgemäße Lichtmischstab 2 auch eine solche Querschnittsform aufweisen, bei der in der Austrittsfläche 8 nur ein einziger rechter Winkel vorhanden ist, wie dies in Fig. 10 gezeigt ist. Bei der in dieser Figur gezeigten Ausführungsform ist lediglich der Winkel α ein rechter Winkel, die anderen Winkel β, γ und δ sind ungleich 90°.

## Patentansprüche

1. Einrichtung zum Erzeugen eines viereckigen, leuchtenden Feldes, mit einem einen viereckigen Querschnitt aufweisenden Lichtmischstab (2), der eine viereckige Eintrittsfläche (7) und eine viereckige Austrittsfläche (8) aufweist und der über die Eintrittsfläche (7) eingekoppeltes Licht zur Austrittsfläche (8) führt, um in dieser das viereckige, leuchtende Feld zu erzeugen, wobei die Austrittsfläche (8) von vier geradlinigen Seiten begrenzt ist, von denen sich jeweils zwei in einem der Eckpunkte der Austrittsfläche (8) treffen, **dadurch gekennzeichnet, daß** bei einem oder zwei Eckpunkten die sich dort treffenden Seiten unter einem rechten Winkel (α, δ) und bei den restlichen Eckpunkten die sich dort treffenden Seiten unter einem Winkel (β, γ), der ungleich 90° ist, zusammenlaufen.

2. Einrichtung nach Anspruch 1, **dadurch gekennzeichnet, daß** der Lichtmischstab (2) so ausgebildet ist, daß jede seiner Querschnittsflächen von vier geradlinigen Seiten begrenzt ist, die unter denselben Winkeln wie die Seiten der Austrittsfläche (8) zusammenlaufen.

3. Einrichtung nach Anspruch 1 oder 2, **dadurch gekennzeichnet, daß** die Querschnittsfläche des Lichtmischstabes (2) von der Eintrittsfläche (7) bis zur Austrittsfläche (8) hin abnimmt.

4. Einrichtung nach einem der Ansprüche 1 bis 3, **dadurch gekennzeichnet, daß** der Lichtmischstab (2) einen Hohlquerschnitt aufweist, der durch vier sich von seiner Eintrittsfläche (7) bis zur Austrittsfläche (8) erstreckende reflektierende Flächen (21, 22, 23, 24) gebildet ist.

5. Einrichtung nach einem der Ansprüche 1 bis 3, **dadurch gekennzeichnet, daß** der Lichtmischstab (2) ein Vollmischstab aus einem für Licht transparenten Material ist.

6. Einrichtung nach einem der Ansprüche 1 bis 3, **dadurch gekennzeichnet, daß** der Lichtmischstab (2) einen Vollmischstab-Abschnitt (32) aus einem für das Licht transparenten Material und einen mit reflektierenden Flächen (38, 39, 40, 41) gebildeten Endabschnitt (32) umfaßt, der einen Hohlquerschnitt aufweist, wobei das dem Vollmischstab-Abschnitt (32) abgewandte Ende des Endabschnitts (32) die Eintritts- oder Austrittsfläche (7, 8) bildet.

7. Einrichtung nach Anspruch 6, **dadurch gekennzeichnet, daß** sich die reflektierenden Flächen (38, 39, 40, 41) teilweise über den Vollmischstab-Abschnitt (32) erstrecken.

8. Einrichtung nach Anspruch 6 oder 7, **dadurch gekennzeichnet, daß** der Endabschnitt (33) eine größere Querschnittsfläche aufweist als der Vollmischstab-Abschnitt (32).

9. Einrichtung nach einem der Ansprüche 6 bis 8, **dadurch gekennzeichnet, daß** der Lichtmischstab (2) einen mit reflektierenden Flächen gebildeten Anfangsabschnitt (46) umfaßt, der einen Hohlquerschnitt aufweist und dessen dem Vollmischstab-Abschnitt (32) abgewandtes Ende die Eintrittsfläche (7) bildet, wobei das dem Vollmischstab-Abschnitt (32) abgewandte Ende des Endabschnitts (32) die Austrittsfläche (8) bildet.

10. Einrichtung nach einem der Ansprüche 1 bis 9, **dadurch gekennzeichnet, daß** der Lichtmischstab (2) aufgrund einer sich in Richtung von der Eintrittsfläche (7) zur Austrittsfläche (8) hin erstreckenden Unterteilung (29) einen ersten und einen zweiten Lichtführungsbereich (30, 31) zum getrennten Führen von Anteilen des eingekoppelten Lichts aufweist.

11. Verwendung einer Einrichtung zum Erzeugen eines viereckigen, leuchtenden Feldes nach einem der Ansprüche 1 bis 10 bei einer Optikvorrichtung mit einer zu beleuchtenden Fläche (4) vorbestimmter Form und einer Beleuchtungsoptik (3), die die Austrittsfläche (8) auf die zu beleuchtende Fläche (4) abbildet.

12. Verwendung nach Anspruch 11, wobei die Optikvorrichtung weiter eine Projektionsoptik (5) zum Projizieren der zu beleuchtenden Fläche (4) auf eine Projektionsfläche (6) umfaßt.
